# EUROPEAN PATENT APPLICATION

(11) **EP 2 052 875 A1**
(43) Date of publication of application: **29.04.2009**
(21) Application number: 08018618.2
(22) Date of filing: 24.10.2008
(51) Int. Cl.: B60B 1/04, B60B 21/06

(54) **Spoked wheel**

(30) Priority: 24.10.2007 IT MI20072055
(71) Applicant: Origlio, Paolo, 20122 Milano (IT)
(72) Inventor: Origlio, Paolo, 20122 Milano (IT)
(74) Representative: Lunati, Vittoriano

(57) **Abstract**

A spoked wheel comprising a rim (1), which defines an internal channel (8), and a hub (2) connected together by means of a plurality of spokes (3), which are respectively fixed at a first end to the rim (1) and at a second end to the hub (2) by means of first and second anchorage means (4, 5) respectively, the first anchorage means (4) comprising a head (4a) and a stem (4b) and being inserted in an air-tight way in respective seats (6) provided in said rim (1). The seats (6) are entirely made in the thickness of the rim (1), and the heads (4a) inserted therein do not project beyond the respective seat (6) in the direction of the channel (8) of the rim (1).

## Description

The present invention relates to a spoked wheel and in particular to a spoked wheel for a tubeless tyre of the type specified in the preamble of the first claim.

Spoked wheels are widely known and used on cycles and motorcycles, and types of wheel suited for mounting tyres without innertubes, known also as tubeless tyre, have been developed. This type of tyre has in fact the advantage of deflating rather slowly in the case of a puncture and is consequently very suited to high-speed applications. Furthermore, wheels provided with tubeless tyres have a smaller inertial mass, with considerable advantages, for example, for the system of suspensions and the general dynamics of the vehicle.

The international patent application No. WO 2005/058613 describes a spoked wheel for tubeless tyres comprising a rim provided with a plurality of holes or seats for housing a respective plurality of anchorage means in the form of threaded connections, or nipples. Fixed to each anchorage means is a spoke, which is in turn constrained to the hub of the wheel. The anchorage means are provided with radial sealing elements, for example O-rings, set on their lateral surface so as to seal the holes on the rim in which they are inserted, thus enabling mounting of a tubeless tyre.

The international patent application No. WO 2007/049317 describes a method of production of a spoked wheel similar to what is described in the aforementioned patent application, in which the anchorage means that fix the spokes to the rim are housed in a tubular seat made integrally in the rim and have moreover the possibility of a limited movement in an axial direction with respect thereto, thus enabling a higher capacity for absorption of impact. The sealed coupling between each anchorage means and its seat is of the cylinder-piston type, obtained, for example, with sealing elements of an O-ring type.

A drawback of known spoked wheels for tubeless tyre is that the means for anchorage of the spokes to the rim and the corresponding sealing systems are relatively cumbersome, enabling provision of the seats substantially only in the central part of the channel of the rim. Consequently, the spoked wheels are characterized by a rather classic design, with the spokes that descend symmetrically from the centre of the channel of the rim towards the two sides of the hub.

For this reason, the spoked wheels are not used for automotive applications, or the more recent motorcycle applications, in which the hub and the rim must be connected in a position corresponding to their sides to enable assembly of the disk and callipers of the brake within the wheel.

Furthermore, once again on account of the overall dimensions of the means for anchorage of the spokes to the rim and of the corresponding sealing systems, the number of spokes that can be mounted on a wheel is rather limited, thus leading to a low loading capacity, which contributes to rendering at times unacceptable application of spoked wheels in sectors such as the automotive one.

Another drawback of known spoked wheels is that the solutions adopted for sealed connection of the spoke to the rim are rather complex and costly.

In fact, the seats of the anchorage means are generally provided in variously shaped cavities made by local deformation of the channel of the rim or, as in the case of rims made of light alloys, by means of a process of pressure casting.

The production of the cavities is functional to the structural requirements and requirements of gas-tightness of a spoked wheel for a tubeless tyre. However, it represents an increase in the production costs in so far as this operation is added to the normal machining operations necessary for production of the spoked wheel.

The technical task of the present invention is consequently to provide a spoked wheel that will enable said drawbacks to be overcome.

In the framework of said technical task, an important purpose of the invention is to provide a spoked wheel for tubeless tyre that will enable flexibility in the arrangement of the seats of the spokes in the rims.

The aforesaid technical task is achieved by a spoked wheel, the main characteristics of which are specified in Claim 1.

Secondary characteristics are specified in the remaining claims.

The advantages and characteristics of the spoked wheel according to the present invention will emerge clearly to persons skilled in the branch from the ensuing detailed and non-limiting description of an embodiment thereof, with reference to the annexed drawings, in which:
Figure **1** is a schematic cross-sectional view of a spoked wheel according to the present invention;
Figure **2** shows the detail II in exploded view of Figure 1; and
Figure **3** shows a schematic cross-sectional view of the wheel of Figure 1, on which a tubeless tyre is mounted.

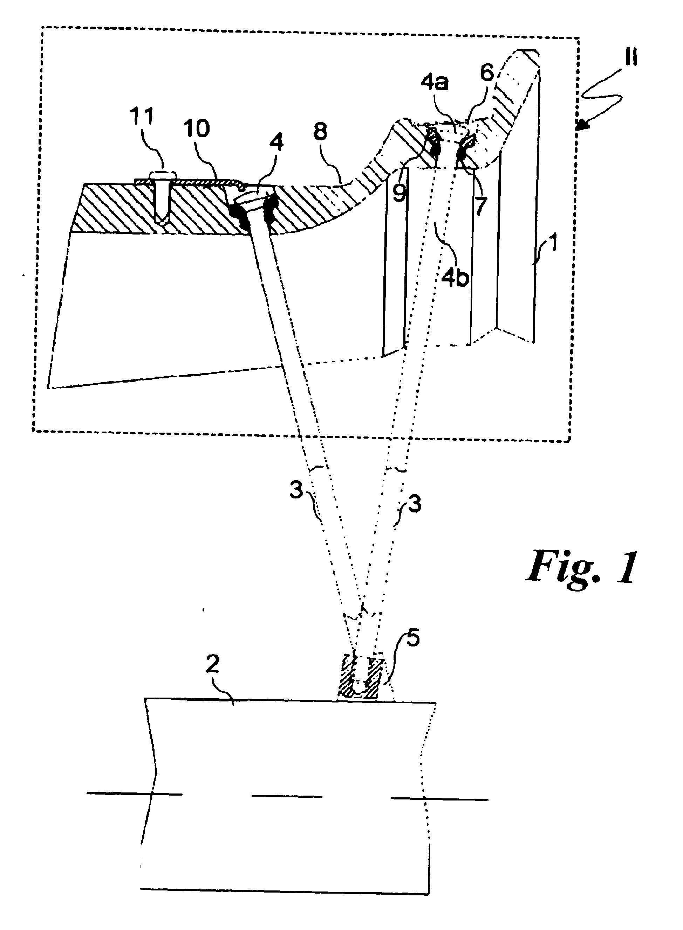

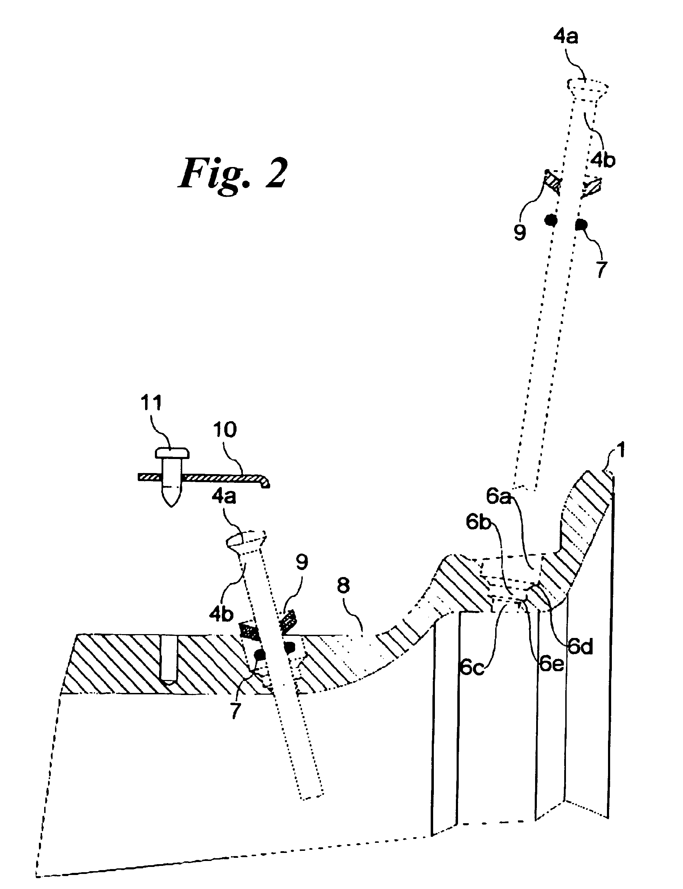

With reference to Figures 1 and 2, the spoked wheel according to the present invention comprises, in a known way, a rim **1** and a hub **2,** which are connected to one another by means of a plurality of spokes **3.** One end of each spoke 3 is fixed to the rim 1 and the other end to the hub 2, respectively with first anchorage means **4** and second anchorage means **5** set therein.

The first anchorage means 4 comprise a head **4a,** preferably shaped with a socket for a manoeuvring wrench, such as a head of a screw, designed to transmit twisting torque to the spoke itself, and a stem **4b** and are inserted in an air-tight way in respective seats **6** made in the rim 1 to enable mounting of a tubeless tyre on the wheel. Air-tightness is obtained by means of sealing elements **7,** such as for example O-rings, which, following upon insertion of the anchorage element 4, seal the respective seat 6, preventing deflation of the tyre. The second anchorage means 5 may, for example, be threaded holes made directly in the body of the hub 2, or else nipples, constrained to the hub 2, which are also designed to enable adjustment of the circularity 5 and of the planarity of the rim 1.

According to the inventive idea underlying the present invention, the seats 6 are entirely made in the thickness of the rim 1, and the heads 4a of the first anchorage means 4 inserted therein do not project beyond the respective seat 6 in the direction of an internal channel **8,** defined by the rim 1.

With particular reference to Figure 2, each seat 6 comprises a first cylindrical portion **6a,** a second cylindrical portion **6b,** and a third cylindrical portion **6c,** which are coaxial and have diameters progressively decreasing from the channel 8 towards the inside of the rim 1. The first portion 6a, which has the largest diameter, faces the channel 8 of the rim 1; the second portion 6b, of intermediate diameter, is set adjacent to the first portion 6a; and the third portion 6c, of smallest diameter, is set adjacent to the second portion 6b and faces the internal part of the rim 1. Each seat 6 moreover comprises a first surface **6d** having an annular shape or the shape of a truncated cone, and a second surface **6e** having an annular shape or the shape of a truncated cone, said surfaces being set in positions corresponding to the variations of section respectively between the first portion 6a and the second portion 6b and between the second portion 6b and the third portion 6c.

The axis of each seat 6 is oriented towards one side of the hub 2, thus defining the direction of the spoke 3 that will be fixed to the anchorage means 4 inserted therein.

The seats 6 can be obtained with simple operations of drilling of the channel 8 using drills of progressively increasing diameter, or else by means of a single machining operation with appropriately shaped drills and/or milling cutters.

When one of the first anchorage means 4 is inserted in the respective seat 6, its head 4a is located completely within the first portion 6a and set bearing upon the first surface 6d having an annular shape or the shape of a truncated cone, whilst the stem 4b protrudes from the portion 6c of smallest diameter, thus enabling fixing of a spoke 3.

Preferably, the sealing elements 7 are housed in the seats 6 and in particular in the second portion 6b of intermediate diameter, thus being withheld in position in an axial direction between the head 4a of the anchorage means inserted therein and the second surface 6e having an annular shape or the shape of a truncated cone.

To enable a better distribution of the pressures of contact both during tensioning of the spokes 3 and during operation of the wheel, between the head 4a of the first anchorage means 4 and the first surface 6d having an annular shape or the shape of a truncated cone, there can advantageously be inserted an element **9** having an annular shape or the shape of a truncated cone, such as for example a washer.

The first anchorage means 4 are appropriately made integrally and of a single piece with the spokes 3, with the head 4a formed directly at the end of the spoke 3, for example, by means of rolling or hot deformation, and the stem 4b coinciding with the stem of the spoke 3. Consequently, assembly of the spoked wheel proves extremely simplified in so far as it is no longer necessary to insert, as is usual, first the anchorage means in the rim and then fix the spokes to said means. In fact, the spokes 3 are directly inserted in the respective seats 6 on the side of the channel 8 by sliding the stem 4b into the third portion 6c of the respective seats 6 until the head 4a is brought to bear upon the first surface 6d having an annular shape or the shape of a truncated cone, and mounting of the sealing elements 7 is performed at the same time as insertion of the spokes 3 in the respective seats 6.

This solution moreover enables considerable simplification of the system of connection of the rim to the hub in so far as there is necessary a smaller number of pieces, and this results in a marked reduction of the production costs of a spoked wheel for tubeless tyres.

According to the present invention, the first anchorage means 4 have the possibility of a limited movement in an axial direction with respect to the respective seat 6 in order to bestow upon the spoked wheel a greater resistance to impact.

In order to prevent, in the case of failure of a spoke 3, exit of the first anchorage means 4 from the respective seats 6 and the consequent deflation of the tyre, in a position corresponding to each seat 6 there are set clamping means, which define a position of end of travel in the direction of the channel 8 for the first anchorage means 4.

In the embodiment illustrated, said clamping means comprise a plate **10,** fixed to the channel 8 by means of a screw **11.** The end of the plate 10 is appropriately curved towards the head 4a of the respective anchorage means 4, defining therewith a pre-set play, which depends, for example, upon the conditions of operation and of loading of the spoked wheel.

Alternatively, the clamping means can be provided, for example, by plugs fixed directly on the first portion 6a of each seat 6 by means of threaded or snap-action profiles, or else by means of elastic rings mounted thereon in purposely provided grooves, or else again by means of a rim fixed in the channel 8.

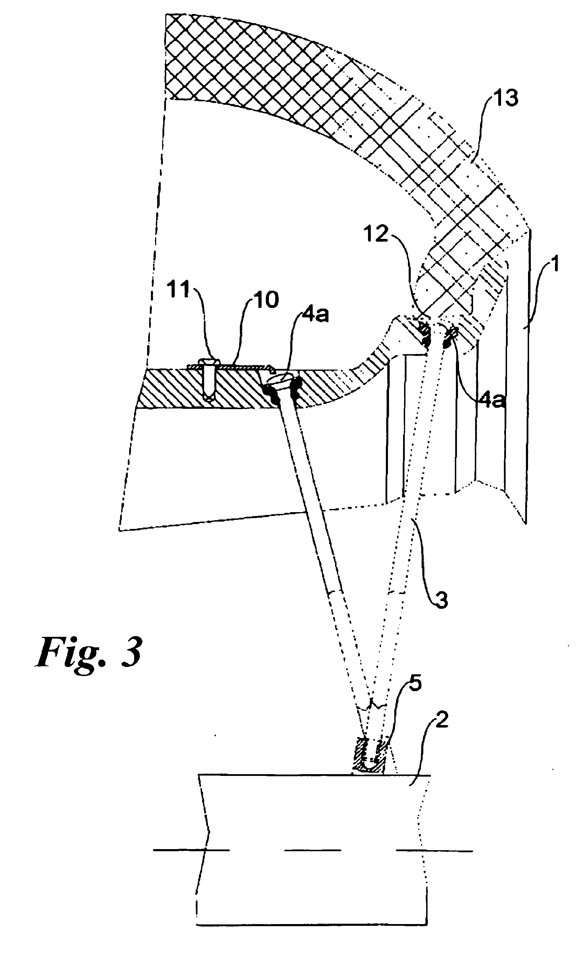

As illustrated in Figure 3, in the case of schemes of fixing of the rim 1 to the hub 2 that are markedly asymmetrical, the clamping means for the seats 6 that are made in the proximity of one side of the rim 1 are represented directly by the bead **12** of a tyre **13,** which superimposes on the seat 6, performing the same function as the plate 10.

The present invention achieves important advantages.

In particular, thanks to the conformation of the seats in the thickness of the rim 1 and to the fact that the heads 4a of the anchorage means 4 of the spokes 3 are completely contained therein, it is possible to provide the connection between the hub 2 and the rim 1 in any point of the channel 8 of the rim 3 itself, for example in the compartment for housing the tyre, and without resorting to additional operations of deformation of the rim 1 or to particular processes of production thereof for the formation of the seats 6 of the anchorage means 4. A further result is the freedom to decide at the last moment how many spokes to use to mount the wheel, as well as what arrangement to adopt for orientation of the spoking, with a consequent reduction in the number of rims to be kept in the warehouse.

Consequently, it is possible to produce spoked wheels suited for application in the motorcycle and automotive field with a space within the rim 1 for housing a disk brake and corresponding callipers.

Furthermore, given the same diameter of the rim 1, it is possible to provide a larger number of seats 6 for the anchorage means as compared to traditional rims, thus enabling production of spoked wheels with a high loading capacity and hence suited also to applications in the automotive field and to the more recent developments in the motorcycle sector.

Another advantage afforded by the present invention is to enable a considerable simplification of the system of sealed connection of the spoke to the rim 1, rendering far more economically advantageous production of the spoked wheel.

Possible variations and/or additions to the embodiment of the invention described and illustrated herein can be made by persons skilled in the branch, without this implying any departure from the scope of the ensuing claims.

## Claims

1. A spoked wheel comprising: a rim (1), which defines an internal channel (8) and comprises seats (6); a hub (2); and a plurality of spokes (3), fixed at one first end to said rim (1) and at one second end to said hub (2) respectively with first and second anchorage means (4, 5), said first anchorage means (4) being designed to be inserted in said seats (6) and to ensure air-tightness of said rim (1), said spoked wheel being **characterized in that** said seats (6) are entirely made in the thickness of said rim (1) and each of said first anchorage means (4) is designed to be inserted completely in a respective one of said seats (6) in such a way as not to project in the direction of said channel (8).

2. The spoked wheel according to the preceding claim, in which said seats (6) comprise a first cylindrical portion (6a), a second cylindrical portion (6b), and a third cylindrical portion (6c), which are coaxial and have diameters progressively decreasing from said channel (8) towards the inside of said rim (1), and in which said first anchorage means (4) comprise a head (4a) and a stem (4b).

3. The spoked wheel according to the preceding claim, in which the axis of each of said seats (6) is oriented towards one side of said hub (2).

4. The spoked wheel according to Claim 2 or Claim 3, in which said head (4a) of one of said anchorage means (4), inserted in the respective said seat (6), is in said first portion (6a) of largest diameter, and said stem (4b) protrudes from said third portion (6c).

5. The spoked wheel according to Claim 4, in which said head (4a) of one of said anchorage means (4), inserted in the respective said seat (6), bears upon a first surface having an annular shape or the shape of a truncated cone (6d), set in a position corresponding to the variation of section between said first portion (6a) and said second portion (6b).

6. The spoked wheel according to Claim 5, comprising an element having an annular shape or the shape of a truncated cone (9), set between said head (4a) of said first anchorage means (4) and said first annular surface (6d) of said seat (6).

7. The wheel according to Claim 6, in which said element having an annular shape or the shape of a truncated cone (9) is a washer.

8. The spoked wheel according to one or more of Claims 2 to 7, in which each of said seats (6) houses airtight sealing elements (7).

9. The spoked wheel according to Claim 8, in which said sealing elements (7) are set in said second portion (6b) around said stem (4b) of said first anchorage means (4.).

10. The spoked wheel according to one or more of the preceding claims, in which said first anchorage means (4) are integral and made of a single piece with said spokes (3).

11. The spoked wheel according to Claim 11, in which said first anchorage means (4) comprise a head (4a) and a stem (4b), said head (4a) of said first anchorage means (4) being constituted by the end of the spoke (3) and said stem (4b) of said first anchorage means (4) coinciding with one of said spokes (3).

12. The spoked wheel according to Claim 10 or Claim 11, in which said head (4a) comprises a socket for a manoeuvring wrench designed to transmit twisting torque to said spoke (3).

13. The spoked wheel according to one or more of the preceding claims, in which, in a position corresponding to each one of said seats (6), there are set clamping means (10, 11, 12), designed to prevent exit of said first anchorage means (4) from said seats (6) in the direction of said channel (8).

14. The spoked wheel according to the preceding claim, in which said clamping means (10, 11) comprise a plate (10), fixed to said channel (8) by means of a screw (11), one end of said plate (10) being curved in the direction of said head (4a).

15. The spoked wheel according to one of the preceding claims, in which said seats (6) are made in the proximity of one side of said rim (1).
